# FASCICULE DE BREVET EUROPEEN

(11) **EP 0 965 562 B1**
(45) Date de publication et mention de la délivrance du brevet: **02.01.2004**
(21) Numéro de dépôt: 99201913.3
(22) Date de dépôt: 15.06.1999
(51) Int. Cl.: C01B 15/013

(54) **Procédé et installation pour la fabrication d'une solution aqueuse de peroxyde d'hydrogène et solution aqueuse de peroxyde d'hydrogène**
Verfahren und Anlage zur Herstellung einer wässerigen Wasserstoffperoxydlösung und wässerige Wasserstoffperoxydlösung
Process and installation for preparing an aqueous hydrogen peroxide solution and aqueous hydrogen peroxide solution

(30) Priorité: 18.06.1998 BE 9800468
(43) Date de publication de la demande: 22.12.1999
(73) Titulaire: SOLVAY (Société Anonyme), 1050 Bruxelles (BE)
(72) Inventeur: Pennetreau, Pascal, 1330 Rixensart (BE); Vandenbussche, Alain, Northwich CW8 2XA (GB)
(74) Mandataire: Vande Gucht, Anne

(56) Documents cités:
- EP-A- 0 529 723
- US-A- 3 321 279

## Description

La présente invention a pour objet un procédé amélioré de fabrication d'une solution aqueuse épurée de peroxyde d'hydrogène.
Il est connu (demande de brevet EP 0529723 A1 au nom de INTEROX INTERNATIONAL) d'obtenir une solution aqueuse épurée de peroxyde d'hydrogène selon le procédé aux alkylanthraquinones. Dans ce procédé connu une solution aqueuse brute de peroxyde d'hydrogène est introduite dans un épurateur alimenté en solvant organique. La solution aqueuse de peroxyde d'hydrogène recueillie à la sortie de l'épurateur est ensuite soumise à une distillation. Une partie de la purge de distillation est recyclée vers l'étape d'oxydation du procédé aux alkylanthraquinones. La solution aqueuse de peroxyde d'hydrogène obtenue selon ce procédé connu contient une quantité élevée de composés organiques. Quand on examine la nature de ces composés organiques on constate qu'il y a une variété de composés organiques présents. La constitution chimique de ces composés organiques peut être déterminée, par exemple, par GC/MS (chromatographie gazeuse/spectrométrie de masse). Des traitements de distillation permettent d'indiquer les points d'ébullition desdits composés. Il a été trouvé qu'une fraction importante des composés organiques comprend de 7 à 11 atomes de carbone, au moins un atome d'oxygène et présente un point d'ébullition de 200 °C à 300 °C. Les impuretés organiques rendent la solution aqueuse de peroxyde d'hydrogène peu utilisables notamment pour des applications électroniques. Il est donc souhaitable de fournir une solution aqueuse de peroxyde d'hydrogène avec une teneur réduite en impuretés organiques. Il est également souhaitable d'obtenir la solution aqueuse de peroxyde d'hydrogène de façon économiquement et techniquement avantageuse, par exemple en consommant un minimum de matières premières et de réactifs frais.

L'invention vise à remédier à ce problème en fournissant un procédé amélioré d'épuration d'une solution aqueuse de peroxyde d'hydrogène, qui permet d'obtenir une pureté élevée en composés organiques tout en restant économiquement avantageux.

En conséquence, l'invention concerne un procédé de fabrication d'une solution aqueuse épurée de peroxyde d'hydrogène dans lequel une solution aqueuse brute de peroxyde d'hydrogène est soumise à un lavage avec au moins un solvant organique qui est un mélange d'un solvant organique non polaire et d'un solvant organique polaire que l'on a soumis préalablement au lavage à un traitement d'épuration par stripping à la vapeur d'eau.

Il a été trouvé, de manière surprenante, que le lavage d'une solution aqueuse brute de peroxyde d'hydrogène avec un solvant que l'on a soumis à un traitement d'épuration par stripping à la vapeur d'eau préalablement au lavage résout le problème posé ci-avant. Le lavage élimine une grande partie des impuretés qu'on retrouve habituellement dans les solutions aqueuses de peroxyde d'hydrogène après un traitement de distillation.

Par lavage on entend désigner tout traitement bien connu en industrie chimique d'une solution aqueuse brute de peroxyde d'hydrogène avec un solvant organique destiné à réduire la teneur de la solution aqueuse de peroxyde d'hydrogène en impuretés. Ce lavage peut consister, par exemple, à extraire des impuretés de la solution aqueuse brute de peroxyde d'hydrogène au moyen d'un solvant organique dans des appareillages tels que des extracteurs centrifuges ou des colonnes d'extraction liquide-liquide, par exemple, fonctionnant à contre courant. Les colonnes d'extraction liquide-liquide sont préférées. Parmi les colonnes d'extraction liquide-liquide les colonnes à plateaux perforés sont préférées.

Par solution aqueuse brute de peroxyde d'hydrogène on entend désigner les solutions provenant directement d'une étape de synthèse de peroxyde d'hydrogène ou d'une étape d'extraction de peroxyde d'hydrogène ou d'une unité de stockage. La solution aqueuse brute de peroxyde d'hydrogène peut avoir subi un ou plusieurs traitements de séparation d'impuretés préalablement au lavage selon le procédé selon l'invention.

Il est préféré d'amener le solvant organique à contre-courant par rapport à la solution aqueuse brute de peroxyde d'hydrogène. L'efficacité du lavage dépend du débit du solvant organique. L'efficacité du lavage s'améliore quand on augmente le débit du solvant organique. Le volume de solvant organique utilisé pour le lavage est défini comme le quotient du débit de solvant et du débit de la solution de peroxyde d'hydrogène. Le volume utilisé dans le procédé selon l'invention est généralement d'au moins 3 l par m³ de solution aqueuse brute de peroxyde d'hydrogène. De préférence le volume est d'au moins 25 l par m³ de solution aqueuse de peroxyde d'hydrogène. Le volume est généralement d'au plus 100 l par m³ de solution aqueuse de peroxyde d'hydrogène. Le volume est de préférence d'au plus 75 l par m³ de solution aqueuse de peroxyde d'hydrogène. La température de lavage est généralement d'au moins 10 °C. On préfère travailler à une température d'au moins 20 °C. Généralement la température est d'au plus 60 °C de préférence d'au plus 40 °C. Le temps de lavage découle de la dimension de l'appareillage choisi et du débit de solution aqueuse brute de peroxyde d'hydrogène que l'on introduit dans l'appareillage.

Dans le procédé selon l'invention on utilise à titre de solvant organique un mélange de solvant polaire et de solvant non polaire. Les solvants polaires assurent une bonne extraction des impuretés. Les solvants non polaires assurent une bonne séparation de phases car ils sont non miscibles à l'eau.

A titre de solvants non polaires, on peut employer, par exemple, un hydrocarbure ou un mélange d'hydrocarbures aliphatiques et/ou aromatiques. Ces hydrocarbures sont, par exemple, le benzène ou des dérivés de benzène comportant de 1 à 5 substituants alkyle. De manière générale les substituants alkyle contiennent de 1 à 5 atomes de carbone. Eventuellement on peut employer des hydrocarbures halogénés aliphatiques et/ou aromatiques tels que le chlorure de méthylène.

Comme solvants polaires, on peut choisir, par exemple, un alcool ou un mélange d'alcools, un amide, un ester d'acide carboxylique ou phosphorique, un alkylphosphate ou un mélange d'au moins deux de ces solvants. Des alcools aliphatiques secondaires, linéaires ou ramifiés donnent de bons résultats. Le diisobutylcarbinol convient bien.

Dans le procédé selon l'invention, le traitement d'épuration du solvant organique est réalisé par stripping à la vapeur d'eau. La technique de stripping à la vapeur d'eau est connue par exemple dans "Handbook of séparation techniques for chemical engineers, Mc Graw-Hill, 1996, part 1 p. 249-274". L'épuration par stripping à la vapeur présente l'avantage qu'il conduit à une polarité qui favorise l'élimination des impuretés. Le rapport pondéral entre le solvant organique non polaire et le solvant organique polaire dans le mélange après l'épuration est de préférence inférieur ou égal à 4. De façon particulièrement préférée ce rapport est inférieur ou égal à 3.

Dans le procédé selon l'invention, la solution aqueuse de peroxyde d'hydrogène peut être obtenue selon toute méthode connue par l'homme du métier. De préférence, la solution de peroxyde d'hydrogène est obtenue selon le procédé aux alkylanthraquinones. Par procédé aux alkylanthraquinones on entend désigner un procédé de production d'une solution aqueuse de peroxyde d'hydrogène consistant à soumettre à une étape d'hydrogénation une solution de travail d'au moins une alkylanthraquinone et/ou d'au moins une tétrahydroalkylanthraquinone, dans un diluant pour produire une ou plusieurs alkylanthrahydroquinones et/ou alkyltétrahydroanthrahydroquinones. A titre de diluants, on peut employer les liquides utilisables comme solvant organique décrits plus haut. La solution de travail sortant de l'étape d'hydrogénation est ensuite soumise à une oxydation au moyen d'oxygène, d'air ou d'air enrichi en oxygène pour fournir du peroxyde d'hydrogène et reformer les alkylanthraquinones et/ou alkyltétrahydroanthraquinones. Le peroxyde d'hydrogène formé est ensuite séparé de la solution de travail au moyen d'une étape d'extraction par exemple au moyen d'eau, le peroxyde d'hydrogène étant récupéré sous forme d'une solution aqueuse brute de peroxyde d'hydrogène. La solution de travail sortant de l'étape d'extraction est ensuite recyclée à l'étape d'hydrogénation afin de recommencer le cycle de production de peroxyde d'hydrogène.

Par alkylanthraquinones, on entend désigner les 9,10-anthraquinones substituées en position 1, 2 ou 3 par au moins une chaîne latérale alkyle de type aliphatique linéaire ou ramifiée comprenant au moins un atome de carbone. Habituellement, ces chaînes alkyles comportent moins de 9 atomes de carbone et, de préférence, moins de 6 atomes de carbone. Des exemples de telles alkylanthraquinones sont la 2-éthylanthraquinone, la 2-isopropyl-anthraquinone, les 2-sec- et 2-tert-butylanthraquinones, les 1,3-, 2,3-, 1,4- et 2,7-diméthylanthraquinones, les 2-iso- et 2-tert-amylanthraquinones et les mélanges de ces quinones.

Par alkylanthrahydroquinones, on entend désigner les 9,10-hydroquinones correspondantes aux 9,10-alkylanthraquinones explicitées ci-dessus.

Selon une variante du procédé selon l'invention, la solution aqueuse de peroxyde d'hydrogène issue du lavage est soumise à au moins une étape ultérieure de purification. Cet étape sert notamment à éliminer ou à réduire le contenu en solvant organique entraîné du lavage. L'étape ultérieure de purification peut consister en toute méthode bien connue par l'homme du métier destinée à réduire le contenu en impuretés d'une solution aqueuse de peroxyde d'hydrogène. Une étape de distillation convient bien. Cette variante du procédé selon l'invention permet d'obtenir des solutions aqueuses de peroxyde d'hydrogène présentant un COT (concentration totale en carbone organique), défini selon la norme ISO 8245, inférieur ou égal à 72 mg/l, de préférence inférieur ou égal à 36 mg/l. On peut même atteindre des COT inférieurs ou égaux à 12 mg/l.

Dans une forme de réalisation particulière du procédé selon l'invention, le solvant organique est une partie de la solution de travail utilisée dans le procédé aux alkylanthraquinones. Cette forme de réalisation permet de moduler le débit d'alimentation en solvant organique dans le lavage de la solution aqueuse brute de peroxyde d'hydrogène obtenue selon le procédé aux alkylanthraquinones. Il est en effet souhaitable de disposer d'un débit suffisant en solvant organique pour alimenter le lavage d'une solution aqueuse de peroxyde d'hydrogène. Il est particulièrement souhaitable de pouvoir régler le débit de solvant organique en fonction de l'efficacité de lavage souhaitée et en fonction de la quantité de solution aqueuse brute de peroxyde d'hydrogène à soumettre au lavage.

Dans le procédé aux alkylanthraquinones, la solution de travail est disponible en une quantité suffisamment grande pour permettre d'en prélever une quantité de solvant organique nécessaire pour atteindre le débit d'alimentation en solvant organique souhaité.

Le procédé selon l'invention présente des avantages économiques et techniques car il évite l'utilisation de grandes quantités de solvant organique frais pour alimenter l'étape de lavage. Les solvants organiques frais sont plus coûteux que les solvants épurés. Les grandes quantités sont difficilement gérables car il faut assurer l'alimentation en continu avec le solvant organique frais et sa destruction après le lavage.

Dans le procédé selon l'invention, le solvant organique, après le lavage, peut être soumis à un traitement de régénération. Il peut ensuite être recyclé à l'étape de lavage. Il peut aussi être recyclé à l'étape d'épuration. Le cas échéant, il peut être recyclé dans la solution de travail utilisée dans le procédé aux alkylanthraquinones.

Le traitement de régénération consiste, par exemple, à soumettre le solvant à une ou plusieurs extractions, et à un ou plusieurs traitements au moyen d'un réactif chimique compatible avec le solvant organique pour détruire les impuretés. L'extraction peut être réalisée au moyen d'eau. On peut utiliser à titre de réactif chimique, par exemple, un réactif alcalin.

A titre de réactif alcalin, on peut mettre en oeuvre, par exemple, une solution aqueuse d'un hydroxyde de métal alcalin ou alcalino-terreux ou encore une solution aqueuse d'ammoniac. Un traitement réalisé par mélange du solvant organique avec une solution aqueuse d'hydroxyde de sodium donne de bons résultats. De préférence on réalise le traitement avec une solution aqueuse d'hydroxyde de sodium 1 à 2 N à 80 °C.

Une séquence de trois étapes: extraction par l'eau, réaction avec une solution aqueuse d'un réactif alcalin suivie par un nouveau lavage au moyen d'eau donne de bons résultats. La première étape d'extraction par l'eau a pour but d'extraire la faible quantité de peroxyde d'hydrogène se trouvant à l'état dissous dans le solvant organique. Ce peroxyde d'hydrogène peut lui aussi être récupéré et recyclé dans l'unité d'oxydation. La deuxième étape de réaction avec une solution aqueuse d'un réactif alcalin a pour but de détruire un certain nombre d'impuretés organiques telles que les peroxydes organiques et la troisième étape de lavage par l'eau a pour but d'extraire les produits de décomposition solubles générés à la deuxième étape ainsi que l'excès de réactif alcalin mis en oeuvre à cette étape.

Le procédé de l'invention permet l'obtention d'une solution aqueuse de peroxyde d'hydrogène avec une teneur réduite en impuretés organiques, à savoir, une solution aqueuse de peroxyde d'hydrogène avec un COT défini selon la norme ISO 8245 inférieur ou égal à 72 mg/l. De préférence le COT est inférieur ou égal à 36 mg/l.

Des solutions particulières obtenables selon le procédé de l'invention contiennent moins de 30 mg/l de composés organiques comprenant de 7 à 11 atomes de carbone et au moins un atome d'oxygène et présentant un point d'ébullition de 200 °C à 300 °C. De préférence la solution contient moins de 15 mg/l de composés organiques comprenant de 7 à 11 atomes de carbone et au moins un atome d'oxygène et présentant un point d'ébullition de 200 °C à 300 °C.

La teneur des solutions aqueuses de peroxyde d'hydrogène en composés organiques, exprimée en mg/l, découle d'une part de la détermination du COT, défini selon la norme ISO 8245 et de l'analyse par GC/MS des contributions de différents composés organiques au COT.

Les solutions aqueuses de peroxyde d'hydrogène obtenables selon le procédé de l'invention présentent généralement une concentration en peroxyde d'hydrogène d'au moins à 10 % en poids et, le plus souvent, d'au moins 30 %. De même, ces solutions contiennent généralement au plus 80 % en poids de peroxyde d'hydrogène et, le plus souvent, au plus 75 %.

L'invention concerne aussi une installation pour la production de peroxyde d'hydrogène par le procédé aux alkylanthraquinones comportant une unité d'hydrogénation d'une solution de travail organique contenant les alkylanthraquinones en solution, une unité d'oxydation des hydroquinones produites dans l'unité d'hydrogénation, une unité d'extraction du peroxyde d'hydrogène de la solution de travail et une unité de lavage de la solution aqueuse brute de peroxyde d'hydrogène issue de l'unité d'extraction, l'unité de lavage étant alimentée en solvant organique provenant d'une unité d'épuration contenant une unité de stripping à la vapeur d'eau.

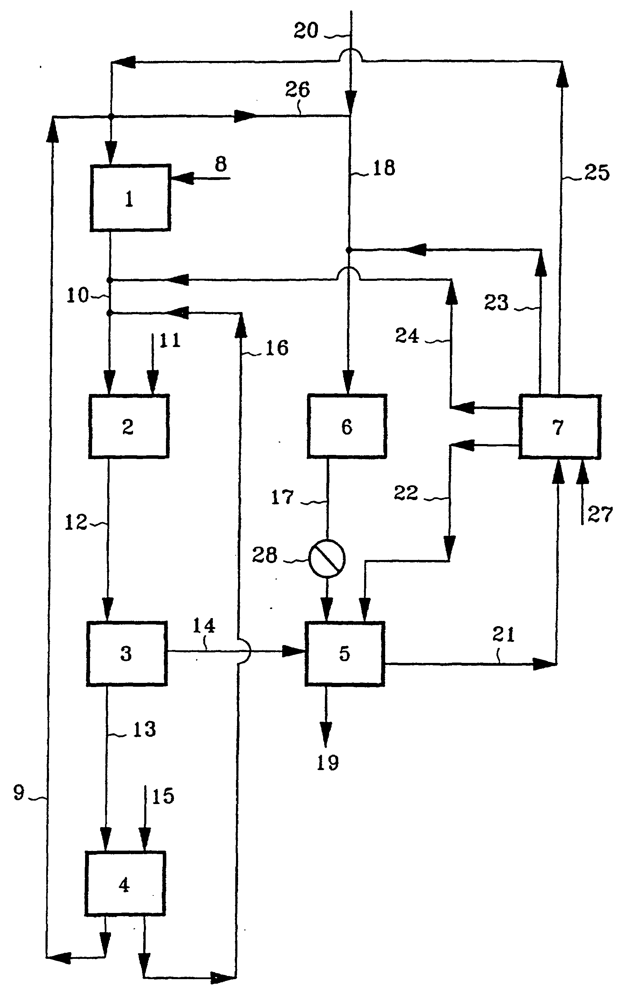

L'installation est par ailleurs explicitée avec plus de détails dans la description qui suit et qui se réfère à la figure du dessin annexé donnant une représentation schématique d'une forme de réalisation préférée de l'installation selon l'invention.

L'installation comporte essentiellement une unité d'hydrogénation 1 alimentée en hydrogène gazeux 8 et avec la solution organique de travail contenant les alkylanthraquinones par la canalisation 9. La solution de travail hydrogénée contenant les alkylanthrahydroquinones quitte l'unité d'hydrogénation 1 par la canalisation 10 et entre dans l'unité d'oxydation 2 alimentée en air 11. L'unité d'oxydation 2 reçoit par ailleurs via la canalisation 16 la solution aqueuse recyclée en provenance de l'unité d'extraction 4. Après oxydation, le mélange de solution organique de travail et de solution aqueuse recyclée quitte l'unité d'oxydation 2 par la canalisation 12 et entre dans un séparateur 3 où l'on réalise la séparation de la phase organique quittant le séparateur 3 par la canalisation 13 d'avec la phase aqueuse quittant le séparateur par la canalisation 14. La canalisation 13 entre dans l'unité d'extraction 4 alimentée par ailleurs en eau pure via l'entrée 15. La solution aqueuse quittant l'unité d'extraction 4 et contenant le peroxyde d'hydrogène est recyclée vers l'unité d'oxydation via la canalisation 16. La solution organique de travail épuisée en peroxyde d'hydrogène quitte l'unité d'extraction 4 par la canalisation 9 et est ensuite recyclée à l'unité d'hydrogénation 1 pour y entamer un nouveau cycle de production.

La solution aqueuse brute de peroxyde d'hydrogène quittant le séparateur 3 par la canalisation 14 est introduite dans une unité de lavage 5 alimenté par la canalisation 17 en solvant organique provenant d'une unité d'épuration 6 contenant une unité de stripping à la vapeur d'eau. L'unité d'extraction 4 et l'unité de lavage 5 peuvent consister en tout.appareillage bien connu en lui même pour extraire un soluté d'un liquide au moyen d'un autre liquide non miscible dans le premier tels que, par exemple, des extracteurs centrifuges ou des colonnes d'extraction liquide-liquide fonctionnant à contre courant. Les colonnes d'extraction liquide-liquide sont préférées. L'unité d'épuration 6 est alimentée par les canalisations 20 et 18 en solvant organique.

Dans une variante de l'installation, qui est préférée, l'unité d'épuration 6 reçoit une partie de la solution de travail prélevée par les canalisations 26 et 18.

La solution aqueuse épurée de peroxyde d'hydrogène quitte l'unité de lavage 5 par la canalisation 19 qui peut conduire, par exemple, vers un récipient de stockage ou une unité de distillation.

Le solvant organique quitte le laveur 5 par la canalisation 21. Dans une variante de l'installation selon l'invention une unité de régénération de solvant organique 7 reçoit le solvant organique quittant le laveur par la canalisation 21. L'unité de régénération est alimentée par la canalisation 27 en de l'eau pure et/ou en un réactif chimique tel que décrit ci-dessus. Cette unité de régénération de solvant organique peut comporter, par exemple une ou plusieurs unités de traitement avec de l'eau pure et un ou plusieurs réacteurs alimentés avec une solution aqueuse de NaOH.

Selon des variantes de l'installation selon l'invention, l'installation comporte une ou plusieurs des canalisations 22 à 25, destinées à recycler le solvant organique quittant l'unité de régénération 7 vers le laveur par la canalisation 22, vers l'unité d'épuration par la canalisation 23, vers l'unité d'oxydation par la canalisation 24 et/ou vers l'unité d'hydrogénation par la canalisation 25.

Les exemples donnés ci-après entendent illustrer l'invention sans toutefois la limiter.

### Exemple 1

On introduit un débit de 1800 kg/h d'une solution aqueuse brute de peroxyde d'hydrogène, obtenue selon le procédé aux alkylanthraquinones et présentant une teneur en peroxyde d'hydrogène de 40 % en poids et un COT de 315 mg/l dans un laveur contenant 3.8m³ de solvant organique prélevé de la solution de travail utilisée dans le procédé aux alkylanthraquinones composée essentiellement de dérivés de benzène substitués alkyle et de diisobutylcarbinol et ayant subi un stripping à la vapeur d'eau. Le tableau 1 reprend les débits d'alimentation en solvant organique de l'unité de lavage et le COT de la solution aqueuse de peroxyde d'hydrogène lavée et distillée, présentant une teneur en peroxyde d'hydrogène de 60 % en poids.

**Tableau 1**

| No. | débit de solvant organique [l/h] | COT (peroxyde d'hydrogène concentrée 60 % poids) [mg/l] |
|---|---|---|
| 1A | 25 | 56 |
| 1B | 50 | 37 |

### Exemple 2 (non conforme à l'invention)

On suit la même procédure qu'en exemple 1 en remplaçant le solvant organique ayant subi un stripping à la vapeur d'eau par un solvant organique récupéré industriellement dans les évents de la colonne d'oxydation du procédé aux alkylanthraquinones. Le tableau 1 reprend le débit d'alimentation en solvant organique du laveur et le COT de la solution aqueuse de peroxyde d'hydrogène lavée selon le procédé non conforme à l'invention et distillée, présentant une teneur en peroxyde d'hydrogène de 60 % en poids.

**Tableau 2**

| No. | débit de solvant organique [l/h] | COT (peroxyde d'hydrogène concentrée 60 % poids) [mg/l] |
|---|---|---|
| 2 (non conforme à l'invention) | 6 | 99 |

On constate que le procédé selon l'invention permet de réduire le COT de la solution distillée de peroxyde d'hydrogène de 62.6 %.

### Exemple 3

Les composés organiques contenus dans une solution aqueuse de peroxyde d'hydrogène présentant une teneur en peroxyde d'hydrogène de 40 % en poids obtenue selon le procédé aux alkylanthraquinones et lavée selon une procédure conforme à l'exemple 2 (non conforme à l'invention), sont analysés par GC/MS. Les concentrations des composés organiques sont déterminées par GC.

La teneur en composés comprenant de 7 à 11 atomes de carbone, au moins un atome d'oxygène et présentant un point d'ébullition de 200 °C à 300 °C est de 36 mg/l. Le COT est de 148 mg/l.

La solution aqueuse de peroxyde d'hydrogène épurée est soumise à une distillation. La teneur de la solution après distillation en peroxyde d'hydrogène est de 60 % en poids.

La teneur en composés comprenant de 7 à 11 atomes de carbone, au moins un atome d'oxygène et présentant un point d'ébullition de 200 °C à 300 °C est de 49 mg/l. Le COT est de 125 mg/l.

On constate une accumulation dans la solution de peroxyde d'hydrogène distillée des composés comprenant de 7 à 11 atomes de carbone, au moins un atome d'oxygène et présentant un point d'ébullition de 200 °C à 300 °C.

### Exemple 4

On analyse par GC les composés organiques contenus dans une solution aqueuse de peroxyde d'hydrogène lavée obtenue selon une procédure analogue à l'exemple 1. La teneur en composés comprenant de 7 à 11 atomes de carbone, au moins un atome d'oxygène et présentant un point d'ébullition de 200 °C à 300 °C est de 11 mg/l.

## Revendications

1. Procédé de fabrication d'une solution aqueuse épurée de peroxyde d'hydrogène dans lequel une solution aqueuse brute de peroxyde d'hydrogène est soumise à un lavage avec au moins un solvant organique qui est un mélange d'un solvant organique non polaire et d'un solvant organique polaire que l'on a soumis, préalablement au lavage, à un traitement d'épuration par stripping à la vapeur d'eau.

2. Procédé selon la revendication 1 dans lequel le solvant organique est un mélange d'un solvant organique non polaire et d'un solvant organique polaire dans un rapport pondéral inférieur ou égal à 4.

3. Procédé selon la revendication 1 ou 2 dans lequel on utilise du diisobutylcarbinol à titre de solvant organique polaire.

4. Procédé selon l'une quelconque des revendications 1 à 3 dans lequel le lavage est effectué avec un volume de solvant organique de 3 à 100 l par m3 de solution aqueuse brute de peroxyde d'hydrogène.

5. Procédé selon l'une quelconque des revendications 1 à 4 dans lequel la solution brute de peroxyde d'hydrogène est obtenue selon le procédé aux alkylanthraquinones.

6. Procédé selon la revendication 5 dans lequel le solvant organique est une partie de la solution de travail utilisée dans le procédé aux alkylanthraquinones.

7. Procédé selon la revendication 6 dans lequel, après le lavage, le solvant organique est soumis à un traitement de régénération et recyclé dans la solution de travail utilisée dans le procédé aux alkylanthraquinones.

8. Procédé selon l'une quelconque des revendications 1 à 6 dans lequel, après le lavage, le solvant organique est soumis à un traitement de régénération et recyclé à l'étape d'épuration.

9. Procédé selon la revendication 7 ou 8 dans lequel le traitement de régénération du solvant organique est réalisé par mélange du solvant organique avec une solution aqueuse d'hydroxyde de sodium.

10. Procédé selon l'une quelconque des revendications 1 à 9 dans lequel la solution aqueuse épurée de peroxyde d'hydrogène est soumise à une étape ultérieure de purification après le lavage.

11. Procédé selon la revendication 10 dans lequel l'étape ultérieure de purification est une distillation.

12. Installation pour la production de peroxyde d'hydrogène par le procédé aux alkylanthraquinones comportant une unité d'hydrogénation d'une solution de travail organique contenant les alkylanthraquinones en solution, une unité d'oxydation des hydroquinones produites dans l'unité d'hydrogénation, une unité d'extraction du peroxyde d'hydrogène de la solution de travail et une unité de lavage de la solution aqueuse brute de peroxyde d'hydrogène issue de l'unité d'extraction, l'unité de lavage étant alimentée en solvant organique provenant d'une unité d'épuration contenant une unité de stripping à la vapeur d'eau.

13. Installation selon la revendication 12 dans laquelle une unité de régénération de solvant organique reçoit le solvant organique quittant l'unité de lavage.

14. Installation selon la revendication 12 ou 13 dans laquelle l'unité d'épuration reçoit le solvant organique quittant l'unité de régénération.

15. Installation selon la revendication 12 à 14 dans laquelle le solvant organique est prélevé de la solution de travail organique avant de l'introduire dans l'unité d'épuration.

16. Installation selon la revendication 15 dans laquelle l'unité d'hydrogénation ou l'unité d'oxydation reçoit le solvant organique quittant l'unité de régénération.

## Claims

1. Process for manufacturing a purified aqueous hydrogen peroxide solution, in which a crude aqueous hydrogen peroxide solution is subjected to a washing operation with at least one organic solvent which is a mixture of a nonpolar organic solvent and a polar organic solvent and which has been subjected, prior to the washing operation, to a purification treatment by steam stripping.

2. Process according to Claim 1, in which the organic solvent is a mixture of a nonpolar organic solvent and a polar organic solvent, in a weight ratio of less than or equal to 4.

3. Process according to Claim 2, in which diisobutylcarbinol is used as polar organic solvent.

4. Process according to any one of Claims 1 to 3, in which the washing operation is carried out with a volume of organic solvent of from 3 to 100 l per m³ of crude aqueous hydrogen peroxide solution.

5. Process according to any one of Claims 1 to 4, in which the crude hydrogen peroxide solution is obtained according to the alkylanthraquinone process.

6. Process according to Claim 5, in which the organic solvent is a part of the working solution used in the alkylanthraquinone process.

7. Process according to Claim 6, in which, after the washing operation, the organic solvent is subjected to a regeneration treatment and recycled into the working solution used in the alkylanthraquinone process.

8. Process according to any one of Claims 1 to 6, in which, after the washing operation, the organic solvent is subjected to a regeneration treatment and recycled into the purification step.

9. Process according to Claims 7 or 8, in which the treatment to regenerate the organic solvent is carried out by mixing the organic solvent with an aqueous sodium hydroxide solution.

10. Process according to any one of Claims 1 to 9, in which the purified aqueous hydrogen peroxide solution is subjected to a subsequent purification step after the washing operation.

11. Process according to Claim 10, in which the subsequent purification step is a distillation.

12. Plant for producing hydrogen peroxide by the alkylanthraquinone process, this plant comprising a unit for hydrogenating an organic working solution containing the dissolved alkylanthraquinones, a unit for oxidizing the hydroquinones produced in the hydrogenation unit, a unit for extracting the hydrogen peroxide from the working solution and a unit for washing the crude aqueous hydrogen peroxide solution obtained from the extraction unit, the washing unit being fed with organic solvent from a purification unit containing a steam stripping unit.

13. Plant according to Claim 12, in which an organic solvent regeneration unit receives the organic solvent leaving the washing unit.

14. Plant according to Claim 12 or 13, in which the purification unit receives the organic solvent leaving the regeneration unit.

15. Plant according to Claims 12 to 14, in which the organic solvent is taken from the organic working solution before being introduced into the purification unit.

16. Plant according to Claim 15, in which the hydrogenation unit or the oxidation unit receives the organic solvent leaving the regeneration unit.

## Patentansprüche

1. Verfahren zur Herstellung einer wäßrigen gereinigten Wasserstoffperoxidlösung, worin eine wäßrige rohe Wasserstoffperoxidlösung einem Waschen mit wenigstens einem organischen Lösungsmittel unterworfen wird, das ein Gemisch aus einem nicht polaren organischen Lösungsmittel und einem polaren organischen Lösungsmittel ist, das vor dem Waschvorgang einer Reinigungsbehandlung durch Strippen mit Wasserdampf unterzogen worden ist.

2. Verfahren nach Anspruch 1, worin das organische Lösungsmittel ein Gemisch aus einem nicht polaren organischen Lösungsmittel und einem polaren organischen Lösungsmittel in einem Gewichtsverhältnis von kleiner als oder gleich 4 ist.

3. Verfahren nach Anspruch 1 oder 2, worin als polares organisches Lösungsmittel Diisobutylcarbinol eingesetzt wird.

4. Verfahren nach einem der Ansprüche 1 bis 3, worin das Waschen mit einem Volumen an organischem Lösungsmittel von 3 bis 100 l je m³ der wäßrigen rohen Wasserstoffperoxidlösung vorgenommen wird.

5. Verfahren nach einem der Ansprüche 1 bis 4, worin die rohe Wasserstoffperoxidlösung nach dem Alkylanthrachinonverfahren erhalten wird.

6. Verfahren nach Anspruch 5, worin das organische Lösungsmittel ein Teil der im Alkylanthrachinonverfahren verwendeten Arbeitslösung ist.

7. Verfahren nach Anspruch 6, worin nach dem Waschvorgang das organische Lösungsmittel einer Regenerationsbehandlung unterworfen und in die im Alkylanthrachinonverfahren verwendete Arbeitslösung recycliert wird.

8. Verfahren nach einem der Ansprüche 1 bis 6, worin nach dem Waschen das organische Lösungsmittel einer Regenerationsbehandlung unterworfen und zur Reinigungsstufe recycliert wird.

9. Verfahren nach Anspruch 7 oder 8, worin die Regenerationsbehandlung des organischen Lösungsmittels durch Mischen des organischen Lösungsmittels mit einer wäßrigen Natriumhydroxidlösung vorgenommen wird.

10. Verfahren nach einem der Ansprüche 1 bis 9, worin die wäßrige gereinigte Wasserstoffperoxidlösung nach dem Waschen einer letzten Reinigungsstufe unterzogen wird.

11. Verfahren nach Anspruch 10, worin die letzte Reinigungsstufe eine Destillation ist.

12. Anlage zur Herstellung von Wasserstoffperoxid nach dem Alkylarithrachinonverfahren, umfassend eine Hydriereinheit für eine organische Arbeitslösung, die die Alkylanthrachinone in Lösung enthält, eine Oxidationseinheit für die in der Hydriereinheit gebildeten Hydrochinone, eine Extraktionseinheit für Wasserstoffperoxid aus der Arbeitslösung und eine Wascheinheit für die wäßrige rohe Wasserstoffperoxidlösung, die aus der Extraktionseinheit stammt, wobei die Wascheinheit mit einem organischen Lösungsmittel beschickt wird, das aus einer Reinigungseinheit kommt, die eine Strippeinheit mit Wasserdampf enthält.

13. Anlage nach Anspruch 12, worin eine Regenerationseinheit für organisches Lösungsmittel das aus der Wascheinheit austretende organische Lösungsmittel aufnimmt.

14. Anlage nach Anspruch 12 oder 13, worin die Reinigungseinheit das aus der Regenerationseinheit austretende organische Lösungsmittel aufnimmt.

15. Anlage nach Anspruch 12 bis 14, worin das organische Lösungsmittel aus der organischen Arbeitslösung vor dem Eintritt in die Reinigungseinheit abgezogen wird.

16. Anlage nach Anspruch 15, worin die Hydriereinheit oder die Oxidationseinheit das aus der Regenerationseinheit austretende organische Lösungsmittel aufnimmt.
